# EUROPEAN PATENT APPLICATION

(11) **EP 1 746 676 A1**
(43) Date of publication of application: **24.01.2007**
(21) Application number: 04802566.2
(22) Date of filing: 29.12.2004
(51) Int. Cl.: H01M 4/42, H01M 6/06

(54) **ZINC PARTICLES FOR ZINC-MANGANESE DRY BATTERY AND MANUFACTURE METHOD OF THE SAME**

(30) Priority: 16.11.2004 CN 200410092878
(71) Applicant: Chung Pak Battery Works Ltd.,, Kowloon, Hong Kong (CN)
(72) Inventor: YE, Jinhua, 7/F, Chung Pak Commercial Bldg.,, Kowloon, Hong Kong (CN)
(74) Representative: Kramer - Barske - Schmidtchen
(86) International application number: PCT/CN2004/001554
(87) International publication number: WO 2006/053465

(57) **Abstract**

The present invention relates to dry cells. Disclosed is the zinc particles used for Zn/MnO₂ dry cells, comprising (by weight): 0.0005∼0.0030% magnesium; 0.001∼ 0.005% indium or 0.0005∼0.005% tin ;0∼0.004% lead; 0∼0.0005% cadmium; the rest being zinc. Also disclosed is the preparing method of said zinc particles, comprising: using zinc ingots of which zinc content is above 99.9955%, cadmium content ≦ 0.0005% and lead content ≦ 0.004%, adding 0.0005∼0.0030% magnesium, 0.001∼ 0.005% indium or 0.0005∼0.005% tin; casting into zinc plate under casting temperature of 400°C~500°C, rolling, punching into zinc particles with punch press. It is necessary to add lead and cadmium for the preparation of the prior art zinc particles used in Zn/MnO₂ dry cells, whereas metal indium or tin is added in place of lead and cadmium for the preparation of the zinc particles of the present invention. Compared with prior arts, an advantage of the Zn/MnO₂ dry cells of the present invention is that they are free of lead and cadmium, The preparing process without the addition of lead and cadmium does not lead to environmental pollution, and meets the requirements of environmental protection.

## Description

### FIELD OF THE INVENTION

The present invention relates to dry cells, particularly to the zinc particles used for Zn/MnO₂ dry cells and the preparing method thereof.

### BACKGROUND OF THE INVENTION

The negative electrode body of the commonly used Zn/MnO₂ dry cell is a zinc can. In order to improve the ductility and strength of zinc metal, it is necessary to add 0.3-0.5% lead (Pb), 0.001-0.004% cadmium (Cd) and 0.0005-0.0030% magnesium (Mg) during zinc casting. Lead and cadmium are heavy metals, their uses being restricted by international environmental protection organizations, so, it is necessary to obtain zinc particles for Zn/MnO₂ dry cells, which are free of lead and cadmium for the purpose of environmental protection.

### SUMMARY OF THE INVENTION

This invention provides zinc particles, which is fabricated without the addition of lead and cadmium.

This invention also provides a method for preparing said zinc particles.

To achieve the object of the present invention, the zinc particles for Zn/MnO₂ dry cells comprise (by weight):
0.0005∼0.0030% magnesium;
0.001∼0.005% indium or 0.0005∼0.005% tin;
0~0.004% lead;
0~0.0005% cadmium;
the rest being zinc.

Another object of this invention can thus be achieved: the method for preparing said zinc particles for Zn/MnO₂ dry cells comprises: zinc ingots of which zinc content is above 99.9955%, cadmium content≦ 0.0005% and lead content≦ 0.004% are used, and 0.0005∼0.0030% magnesium, 0.001~0.005% indium or 0.0005∼0.005% tin are added; it is cast into zinc plate under casting temperature of 400°C~500°C, rolled, and punched into zinc particles with punch press.

It is necessary to add lead and cadmium for the preparation of the prior art zinc particles used in Zn/MnO₂ dry cells, whereas metal indium or tin is added in place of lead and cadmium for the preparation of the zinc particles of the present invention. Compared with prior arts, an advantage of the Zn/MnO₂ dry cells of the present invention is that they are free of lead and cadmium, The preparing process without the addition of lead and cadmium does not lead to environmental pollution, and meets the requirements of environmental protection.

### DETAILED DESCRIPTION OF THE INVENTION

The zinc particles of the present invention comprise (by weight):
0.0005~0.0030% magnesium;
0.001∼0.005% indium or 0.0005~0.005% tin;
0~0.004% lead;
0~0.0005% cadmium;
the rest being zinc.

The conventional process is adopted for preparing said zinc particles.

In preparing, zinc ingots of which zinc content is above 99.9955%(cadmium content ≦ 0.0005% and lead content ≦ 0.004%) are used; and 0.0005~0.010% magnesium, 0.001∼0.005% indium or 0.0005∼0.005% tin are added instead of lead and cadmium; it is cast into zinc plate under casting temperature of 400°C ~500°C and rolled, then punched into zinc particles with required shape and size by punch press. It is necessary for the punched zinc particles to be given surface deburring and lubricant treatments.

By a high-speed precision extruder, the obtained zinc particles are punched into a zinc can, which acts as negative electrode body of a Zn/MnO₂ dry cell.

### EMBODIMENT 1

The zinc particles of the present invention comprises (by weight):
0.0015% magnesium;
0.001 % indium;
0.0018% lead;
0.0002% cadmium;
the rest being zinc.

The conventional process is adopted for preparing zinc particles of this embodiment.

While casting the metal zinc for negative electrode body , 0.0015% magnesium and 0.001 % indium are added instead of lead and cadmium; it is cast into zinc plate under melting temperature of 400°C~500°C and rolled, then punched into zinc particles with required shape and size by punch press. The punched zinc particles are given surface deburring and lubricant treatments.

### EMBODIMENT 2

This embodiment is essentially the same as embodiment 1, except that the indium content of said composition is 0.002%, thus zinc particles containing magnesium and 0.002% indium are obtained.

### EMBODIMENT 3

This embodiment is essentially the same as embodiment 1, except that the indium content of said composition is 0.005%, thus zinc particles containing magnesium and 0.005% indium are obtained.

### EMBODIMENT 4

This embodiment is essentially the same as embodiment 1, except that 0.0005% tin is used instead of said indium, thus zinc particles containing magnesium and 0.0005% tin are obtained.

### EMBODIMENT 5

This embodiment is essentially the same as embodiment 4, except that the tin content is 0.002%, thus zinc particles containing magnesium and 0.002% tin are obtained.

### EMBODIMENT 6

This embodiment is essentially the same as embodiment 4, except that the tin content is 0.005%, thus zinc particles containing magnesium and 0.005% tin are obtained.

The obtained zinc particles of embodiments 1 to 6 are tested with Atomic Absorption Spectrometer (AAS), and the results are listed below:

| embodiment | Amounts of addition (%) | | | | | Analyzed results of zinc particles (%) | | Analyzed results of the cells (%) | |
|---|---|---|---|---|---|---|---|---|---|
| | Lea d (%) | Cadmium (%) | Magnesium (%) | Indium (%) | Tin (%) | Lead (%) | Cadmiu m (%) | Lead (%) | Cadmium (%) |
| embodiment 1 | 0 | 0 | 0.0015 | 0.001 | 0 | 0.0018 | 0.0002 | 0.0004 | 0.00006 |
| embodiment 2 | 0 | 0 | 0.0015 | 0.002 | 0 | 0.0018 | 0.0002 | 0.0004 | 0.00006 |
| embodiment 3 | 0 | 0 | 0.0015 | 0.005 | 0 | 0.0018 | 0.0002 | 0.0004 | 0.00006 |
| embodiment 4 | 0 | 0 | 0.0015 | 0 | 0.0005 | 0.0018 | 0.0002 | 0.0004 | 0.00006 |
| embodiment 5 | 0 | 0 | 0.0015 | 0 | 0.002 | 0.0018 | 0.0002 | 0.0004 | 0.00006 |
| embodiment 6 | 0 | 0 | 0.0015 | 0 | 0.005 | 0.0018 | 0.0002 | 0.0004 | 0.00006 |
| Comparative Example (presently used) | 0.4 | 0.0005 | 0.0015 | 0 | 0 | 0.45 | 0.0006 | 0.071 | 0.00008 |

### Note: 98/101/EEC specification: lead<0.4%, cadmium <0.025%

The surfaces of the zinc cans punched from zinc particles of embodiments 1 to 6 are equivalent to that of the Zn/MnO₂ dry cells now available (with the addition of 0.3-0.5% lead, 0.0005-0.004% cadmium).

The shelf performances of the R6 Zn/MnO₂ primary cells fabricated with the zinc plates obtained from embodiments 1 to 6 and the cells shelved at 60 °C and 90 % RH for 10 days are compared with the performance of the cell presently used (The negative electrode containing 0.3~0.5 % lead and 0.0005∼0.004 % cadmium). (Evaluated at 20 °C):

| embodiment | Comparison of the shelf performances of the cells | | | |
|---|---|---|---|---|
| | Primary cells (within 15 days) | | Cells shelved at 60 °C and 90 % RH for 10 days | |
| | Open-circuit Voltage (V) | 5 Ω Load Voltage (V) | Open-circuit Voltage (V) | 5 Ω Load Voltage (V) |
| embodiment 1 | 1.70 | 1.55 | 1.59 | 1.46 |
| embodiment 2 | 1.70 | 1.55 | 1.60 | 1.48 |
| embodiment 3 | 1.70 | 1.55 | 1.59 | 1.47 |
| embodiment 4 | 1.70 | 1.55 | 1.59 | 1.46 |
| embodiment 5 | 1.70 | 1.55 | 1.60 | 1.47 |
| embodiment 6 | 1.70 | 1.55 | 1.59 | 1.47 |
| Comparative Example (Presently used) | 1.70 | 1.55 | 1.61 | 1.47 |

From said embodiments and results, it can be seen that the results of embodiments 2, 3, 4 and 5 are better.

From above results, it can be seen that both of the contents of lead and cadmium of the Zn/MnO₂ dry cells of the present invention are within the maximum allowable level of 98/101/EEC specifications. Lead content is under 0.004%, cadmium content is under 0.0005%, both satisfying the requirement of environmental protection, and can be used as Pb-free and Cd-free Zn/MnO₂ battery.

Although the present invention has been fully described by way of examples, it is noted that the descriptions are not limitations of the invention, various changes of the examples with reference to the descriptions will be apparent to those skilled in the art, and they should be considered as being included within the scope and spirit of the appended claims.

## Claims

1. Zinc particles for Zn/MnO₂ dry cells comprising (by weight):
0.0005∼0.0030% magnesium;
0.001~0.005% indium or 0.0005~0.005% tin;
0∼0.004% lead;
0~0.0005% cadmium;
the rest being zinc.

2. Zinc particles according to claim 1, wherein the particles comprise (by weight):
0.0015 % magnesium;
0.001 % indium;
0.0018% lead;
0.0002% cadmium;
the rest being zinc.

3. Zinc particles according to claim 1, wherein the particles comprise (by weight):
0.0015% magnesium;
0.002 % indium;
0.0018% lead;
0.0002% cadmium;
the rest being zinc.

4. Zinc particles according to claim 1, wherein the particles comprise (by weight):
0.0015% magnesium;
0.005% indium;
0.0018% lead;
0.0002% cadmium;
the rest being zinc.

5. Zinc particles according to claim 1, wherein the particles comprise (by weight):
0.0015 % magnesium;
0.0005% tin;
0.0018% lead;
0.0002% cadmium;
the rest being zinc.

6. Zinc particles according to claim 1, wherein the particles comprise (by weight):
0.0015 % magnesium;
0.002% tin;
0.0018% lead;
0.0002% cadmium;
the rest being zinc.

7. Zinc particles according to claim 1, wherein the particles comprise (by weight):
0.0015 % magnesium;
0.005% tin;
0.0018% lead;
0.0002% cadmium;
the rest being zinc.

8. A method for preparing zinc particles of claim 1, wherein the method comprises: using zinc ingots of which zinc content is above 99.9955%, cadmium content≦ 0.0005% and lead content≦ 0.004%, adding 0.0005∼0.0030% magnesium and 0.001~0.005% indium or 0.0005∼0.005% tin; casting into zinc plate under casting temperature of 400°C~500°C, rolling, punching into zinc particles with punch press.

9. The method according to claim 8, wherein the method further comprises: giving the punched zinc particles surface deburring and lubricant treatments.
